# FASCICULE DE BREVET EUROPEEN

(11) **EP 3 555 345 B1**
(45) Date de publication et mention de la délivrance du brevet: **07.07.2021**
(21) Numéro de dépôt: 17832256.6
(22) Date de dépôt: 19.12.2017
(51) Int. Cl.: C25C 1/14, C25C 1/18, C25C 1/24, C25C 7/02, C25D 3/32, C25D 3/36, C25D 21/18

(54) **PROCEDE ELECTROLYTIQUE POUR EXTRAIRE DE L'ETAIN OU À LA FOIS DE L'ETAIN ET DU PLOMB COMPRIS DANS UN MELANGE ÉLECTRIQUEMENT CONDUCTEUR**
ELEKTROLYTISCHES VERFAHREN ZUR EXTRAKTION VON ZINN ODER GLEICHZEITIG ZINN UND BLEI ENTHALTEN IN EINEM ELEKTRISCH LEITENDEN GEMISCH
ELECTROLYTIC METHOD FOR EXTRACTING TIN OR SIMULTANEOUSLY EXTRACTING TIN AND LEAD CONTAINED IN AN ELECTRICALLY CONDUCTIVE MIXTURE

(30) Priorité: 19.12.2016 FR 1662775
(43) Date de publication de la demande: 23.10.2019
(73) Titulaire: Veolia environnement-VE, 75008 Paris (FR)
(72) Inventeur: GEORGEAUD, Vincent, 78570 Andresy (FR); DIAMAND, Auriane, 92600 Asnieres Sur Seine (FR); LESCOURRET, Anne-Sophie, 78480 Verneuil Sur Seine (FR)
(74) Mandataire: Novagraaf Technologies
(86) Numéro de dépôt international: PCT/FR2017/053680
(87) Numéro de publication internationale: WO 2018/115706

(56) Documents cités:
- CN-A- 104 746 098
- JP-A- S6 176 695
- US-A- 4 589 962
- US-A- 4 650 553
- US-A- 4 662 999
- US-A- 4 885 064

## Description

### Domaine technique de l'invention

L'invention concerne de manière générale le domaine des procédés électrolytiques ou des électrolyses. Elle vise en particulier un procédé pour extraire de l'étain et/ou du plomb compris dans un mélange électriquement conducteur issu de déchets, ce procédé mettant en œuvre, comme solution électrolytique, une solution comprenant de l'acide méthane sulfonique (désigné par l'acronyme MSA) et un ou plusieurs sels métalliques de méthane sulfonate.

Au sens de la présente, on entend par déchet, tout élément solide pouvant être prélevé lors de la mise en œuvre d'un processus de production, de transformation ou d'utilisation d'un produit constitué d'un ensemble de matière. Cet élément solide peut, par exemple, être un élément solide que son détenteur se défait ou dont il a l'intention ou l'obligation de se défaire et/ou de traiter ultérieurement.

### État de la technique antérieure

L'étain et le plomb sont deux métaux reconnus pour perturber fortement, voire empêcher, la mise en œuvre de procédés hydrométallurgiques classiquement utilisés dans le secteur minier et/ou métallurgique.

En particulier, l'industrie actuelle de l'étamage utilise le phénomène de galvanoplastie pour déposer une pellicule d'étain en surface d'un métal par exemple. Ces procédés d'étamage utilisent divers bains dans leur procédé, des bains d'acides (fluoborique ou méthane sulfonique par exemple) et/ou des bains basiques (à base stannate par exemple), et au moins une anode et une cathode au moins partiellement plongées dans au moins un de ces bains. Cette anode (dite anode sacrificielle) doit être d'une grande pureté de façon à ce que le dépôt à la cathode soit de bonne qualité et de façon également à ce qu'il présente, selon son utilité ultérieure, des propriétés de brillance, d'adhérence, de porosité, et/ou de rugosité qui soient soigneusement contrôlées par, d'une part l'ajout d'additifs, et d'autre part, la densité de courant appliquée entre l'anode et la cathode.

D'ailleurs, les documents US4,650,553, CN104 746 098, US4,885,064, US4,589,962, US4,662,999 et JP S6176695 décrivent des procédés électrolytiques pour notamment extraire du plomb compris dans un mélange électriquement conducteur ou pour déposer de manière contrôlée une couche d'étain ou de plomb à la cathode.

Toutefois, l'une des contraintes liées à ces procédés est que les concentrations en métaux dans les bains doivent nécessairement être constantes au cours du temps pour l'obtention d'une bonne qualité et une reproductibilité suffisante du dépôt souhaité. En effet, dans les procédés actuellement utilisés, le procédé d'étamage d'une pièce est considéré comme achevé lorsque l'épaisseur du dépôt à la cathode atteint une valeur prédéterminée.

Il existe donc un réel besoin de fournir un procédé électrolytique d'extraction et de récupération de l'étain et/ou du plomb, compris initialement dans un mélange électriquement conducteur issu de déchets, palliant ces défauts et inconvénients de l'art antérieur, le mélange électriquement conducteur comprenant un ensemble de métaux variés. La bonne extraction de l'étain et/ou du plomb du mélange électriquement conducteur est essentielle car ces deux éléments sont considérés comme étant des éléments toxiques pour les récupérations ultérieures d'autres métaux compris initialement dans ce mélange électriquement conducteur.

Il existe également un besoin de fournir un procédé électrolytique d'extraction de l'étain et/ou du plomb qui puisse être efficace sans pour autant qu'il soit nécessaire de contrôler les concentrations en métaux dans le bain, et sans pour autant que la fin du procédé soit indiquée par une valeur d'épaisseur de dépôt prédéterminée.

### Description de l'invention

Pour résoudre les inconvénients cités précédemment, le demandeur a mis au point un procédé ayant pour objectif d'extraire de l'étain et/ou du plomb compris dans un mélange électriquement conducteur issu de déchets, dont le principe de fonctionnement repose, d'une part, sur une électrolixiviation sélective de l'étain et/ou du plomb contenus au préalable dans le mélange électriquement conducteur, et d'autre part, sur une électrodéposition directe de l'étain et/ou du plomb sur une électrode. Le procédé de l'invention peut donc être assimilé à un procédé hybride situé entre les procédés classiques de galvanoplastie et les procédés d'électroraffinage.

Plus particulièrement, l'invention a pour objet un procédé électrolytique pour extraire l'étain ou à la fois l'étain et le plomb compris dans un mélange électriquement conducteur issu de déchets, le mélange électriquement conducteur étant constitué de plusieurs éléments solides et comprenant :
- moins de 50% en masse, par rapport au poids total du mélange, d'étain sous forme métallique,
- moins de 25% en masse, par rapport au poids total du mélange, de plomb sous forme métallique, et
- plus de 25% en masse, par rapport au poids total du mélange, de cuivre métallique, et/ou de fer métallique, et/ou d'aluminium métallique, et/ou d'alliage métallique comprenant du cuivre et/ou du fer et/ou de l'aluminium,
le procédé étant caractérisé en ce qu'il comprend les étapes consistant à :
a) constituer une anode à partir du mélange électriquement conducteur,
b) préparer une solution électrolytique comprenant de l'acide méthane sulfonique MSA (ci-après désigné pas l'acronyme MSA) à une concentration comprise entre 150 g/L et 250 g/L, et du méthane sulfonate d'étain MSSn à une concentration comprise entre 10 g/L et 60g/L en étain et/ou du méthane sulfonate de plomb MSPb à une concentration comprise entre 5 g/L et 120 g/L en plomb,
c) fournir une cathode,
d) immerger au moins en partie l'anode et la cathode dans la solution électrolytique, et
e) appliquer un courant électrique entre l'anode et la cathode, via un dispositif électrique, pour lixivier par oxydation, l'étain ou à la fois l'étain et le plomb de l'anode, et permettre le dépôt sur la cathode de l'étain ou à la fois de l'étain et du plomb, initialement compris dans le mélange électriquement conducteur.

Grâce au procédé selon l'invention, on peut donc extraire l'étain et/ou le plomb d'un mélange électriquement conducteur donné par un procédé électrolytique utilisant l'électrolyse suite à la lixiviation de l'étain et/ou du plomb. Ceci est rendu possible, d'une part, grâce à l'application d'un courant entre la cathode et l'anode qui est le mélange électriquement conducteur, et d'autre part, par la présence d'une solution électrolytique à base d'acide méthane sulfonique MSA. Il est à noter que les ions métalliques ont une limite de solubilité élevée dans l'acide méthane sulfonique MSA, ce qui en fait une solution électrolytique particulièrement adaptée pour le dépôt de l'étain et/ou du plomb.

En tout état de cause, le mélange électriquement conducteur issu de déchets comprend nécessairement une variété d'éléments solides. On ne considère donc pas comme déchet au sens de la présente invention, ni les anodes sacrificielles produites et mises en formes par des procédés pyrométallurgiques pour électroraffinage ultérieur de l'étain et/ou du plomb, ni des anodes sacrificielles comprenant de l'étain, voire un alliage de SnPb, utilisées dans les industries de traitement de surface pour électrodéposition contrôlée de matériaux à protéger ou à embellir. En effet, ces anodes sacrificielles ne sont pas constituées d'un ensemble d'éléments solides disparates en taille et composition.

Par lixiviation ou lixivier, au sens de la présente invention, on entend solubilisation de l'étain et/ou du plomb du mélange électriquement conducteur suite à une application d'un courant électrique entre l'anode et la cathode.

Par ailleurs, ce procédé présente l'avantage d'utiliser une anode sacrificielle constituée d'une variété d'éléments solides et réalisée à partir du mélange électriquement conducteur qu'il n'est notamment pas nécessaire de préparer pour réaliser l'anode. Par ailleurs, il n'est pas non plus nécessaire de contrôler, durant la mise en œuvre du procédé électrolytique selon l'invention, les concentrations d'étain et/ou de plomb dans le bain pour apprécier la fin de la réaction d'électrolixiviation. En effet, la fin du procédé électrolytique d'extraction selon l'invention a lieu dès que l'on a épuisement de l'étain et/ou du plomb à l'anode et peut être notamment remarquée lorsque l'on observe une variation de l'intensité du courant ou du voltage appliqués entre l'anode et la cathode, ou entre l'anode ou la cathode et une électrode de référence.

Au sens de la présente invention, par épuisement d'étain et/ou de plomb à l'anode, on entend qu'au moins 80% de l'étain et/ou du plomb accessible directement physiquement et chimiquement à l'anode a été solubilisée et lixiviée.

Selon ce procédé, il est également possible de choisir la qualité du dépôt désiré de façon à obtenir à la cathode soit un dépôt lisse, soit dendritique, ou pulvérulent. Pour ce faire, il est connu que la morphologie du dépôt dépend entre autre de la densité de courant appliquée. C'est principalement la densité de courant appliquée à la cathode qui va favoriser un type de dépôt en particulier. Toutefois, l'ajout de certains réactifs dans la solution électrolytique peut influencer la forme désirée à densité de courant équivalente. Enfin, la présence de certaines impuretés métalliques ou minérales dans la solution électrolytique peut avoir le même effet.

Avantageusement, le procédé comprend une étape de compactage du mélange électriquement conducteur réalisée soit avant l'étape a) de constitution de l'anode, soit ultérieurement. Cette étape a) de constitution de l'anode peut être réalisée soit préalablement à l'étape b) de préparation de la solution électrolytique, soit ultérieurement.

Dans cette variante de réalisation de l'invention, on peut également relier le mélange électriquement conducteur à un conducteur électrique pouvant être sous forme d'un fil, d'une toile, d'une grille ou autre.

Avantageusement, après la réalisation de l'étape a) de constitution de l'anode, cette anode peut être insérée dans un panier métallique. Le panier métallique est de préférence neutre chimiquement et joue le rôle de conducteur électrique et de répartiteur de courant.

De préférence, le panier métallique est en titane, en acier inoxydable ou en carbone car ces trois matériaux ont l'avantage d'être anodiquement stables en milieu acide méthane sulfonique (ci-après désigné par l'acronyme MSA), c'est-à-dire qu'ils ne se dissolvent pas même en présence d'un courant appliqué dans les limites des conditions d'utilisation de l'invention en termes de courant et tension appliqués..

Il est à noter que le compactage ou la disposition dans un panier du mélange électriquement conducteur sont deux solutions non limitatives pour réaliser l'anode à partir de ces derniers.

Avantageusement, le mélange électriquement conducteur comprend moins de 5% en masse, par rapport au poids total du mélange électriquement conducteur, de tout métal moins noble que l'étain et le plomb, ledit métal étant accessible directement physiquement et chimiquement par la solution électrolytique.

Il est alors à noter que les métaux moins nobles que l'étain et le plomb accessibles directement physiquement et chimiquement peuvent être considérés comme des métaux polluant, voire dégradant, la solution électrolytique.

Par métal moins noble que le plomb et l'étain, on entend au sens de la présente invention, tout métal ou alliage métallique définis par un potentiel d'oxydoréduction plus faible que ceux du plomb et de l'étain, le potentiel d'oxydoréduction étant obtenu dans des conditions standards.

Par tout métal accessible directement physiquement et chimiquement, on entend au sens de la présente invention, tout métal dont tout ou partie de sa surface est en contact direct avec la solution électrolytique.

Par exemple et à titre non limitatif, on peut citer le zinc et l'aluminium comme métaux étant moins nobles que le plomb et l'étain.

Toutefois, le mélange électriquement conducteur peut tout de même comprendre une certaine quantité de zinc et/ou d'aluminium si ces derniers sont non accessibles directement physiquement et chimiquement par la solution électrolytique.

Par non accessible directement physiquement et chimiquement par la solution électrolytique, on entend au sens de la présente, un métal ou alliage métallique enrobés par au moins une autre substance (métal, minéral, organique) ou un autre alliage métallique présentant un potentiel d'oxydoréduction plus important que l'étain et le plomb. De cette façon, le métal ou alliage métallique qui sont enrobés n'impacteront pas la réaction d'électrolixiviation de l'étain et du plomb.

Par exemple, les métaux ou alliages métalliques sont non accessibles directement physiquement et chimiquement si ces derniers sont passivés ou oxydés en surface.

Il est à noter également que, par exemple, l'élément chimique zinc, bien que moins noble dans son état métallique que l'étain et le plomb, n'affecte pas le principe de l'invention dans le cas où ce premier est présent sous forme d'alliages de cuivre tel que le laiton qui est considéré comme plus noble que l'étain ou le plomb.

Avantageusement, le procédé selon l'invention peut comprendre en outre, à l'issue de l'étape e), les étapes suivantes :
- retirer le panier métallique et la cathode de la solution électrolytique,
- rincer le panier métallique avec la solution électrolytique, puis à l'eau pour récupérer la totalité du méthane sulfonate d'étain (ci-après désignés par MSSn) et/ou du méthane sulfonate de plomb (ci-après désignés par MSPb) résiduels sur le panier, et
- récupérer au moins l'étain ou à la fois l'étain et le plomb déposés à la cathode.

Avantageusement, le procédé selon l'invention comprend en outre une étape pour envelopper le panier métallique d'une enveloppe poreuse à base de polymère pour conserver physiquement des éléments du mélange électriquement conducteur dont la plus grande dimension est supérieure ou égale à 20 µm.

Par exemple, cette enveloppe peut être en polypropylène mono-filament, ou multi-filament, dont la porosité permet de conserver, dans le panier, les particules présentant au moins une dimension supérieure à 20 µm. Cette enveloppe peut également être constituée de nylon, de polyéthylène, de polytétrafluoroéthylène, ou de tout autre matériau naturel résistant en particulier à l'acide méthane sulfonique.

Toutefois, il est également possible que le panier métallique soit constitué de fibres de carbone. Dans ce cas, l'enveloppe poreuse et le panier métallique forment une même pièce d'un seul tenant. Il est à noter qu'aucune particule ne quitte le panier métallique, seuls les ions en solutions peuvent migrer. Une telle enveloppe présente donc l'avantage de ne pas entraver la migration électrochimique des ions métalliques lixiviés.

Il est également à noter que l'enveloppe peut être réalisée avec des membranes plus ou moins réticulées de façon à agrandir ou diminuer les diamètres des pores de l'enveloppe poreuse.

Avantageusement, la solution électrolytique peut comprendre en outre un stabilisateur phénolé et/ou des ions chlorures et/ou un antioxydant.

Avantageusement, la cathode peut être composée soit d'aluminium, soit d'acier, soit d'étain et/ou de plomb.

Avantageusement, la densité du courant appliqué peut être comprise entre 150 et 400 A/m² à la cathode, la cathode ayant une forme de plaque.

Il est à noter que si la densité de courant est plus faible que 150 A/m², le dépôt effectué à la cathode présentera des propriétés élevées d'adhésion et ne pourra pas être facilement détachable de celle-ci.

Par dépôts facilement détachables, on entend au sens de la présente invention, des dépôts détachables de la cathode par raclage ou grattage, ou par aspersion d'un jet d'eau à la surface du dépôt.

Il est à noter que si la densité de courant est plus élevée que 400 A/m², on obtient, d'une part, des rendements faradiques de réaction bien inférieurs à 70%, et d'autre part, un dépôt à la cathode qui est pulvérulent et fortement pollué par la solution électrolytique.

Par ailleurs, si l'on souhaite ne récupérer que du plomb à la cathode, selon l'invention, la solution électrolytique ne doit pas nécessairement comprendre de méthane sulfonate d'étain, et si l'on souhaite ne récupérer que de l'étain à la cathode, la solution électrolytique ne doit pas nécessairement comprendre de méthane sulfonate de plomb. Il est également à noter que l'on récupère à la cathode le ou les métaux présents dans le mélange électriquement conducteur dans les mêmes proportions, quelle que soit la nature initiale de l'électrolyte, après mise en régime stationnaire du procédé.

### Brève description des figures

D'autres caractéristiques et avantages innovants de l'invention ressortiront à la lecture de la description ci-après, fournie à titre indicatif et nullement limitatif, en référence aux dessins annexés, dans lesquels les figures illustrent schématiquement des exemples de mise en œuvre du procédé selon l'invention.

Pour plus de clarté, les éléments identiques ou similaires sont repérés par des signes de référence identiques sur l'ensemble des figures.

### Produits

L'acide méthane sulfonique (MSA) utilisé dans les exemples de réalisation ci-après décrit est défini par le numéro CAS 75-75-2. Le méthane sulfonate d'étain (MSSn) utilisé dans le mode de réalisation ci-après décrit est défini par le numéro CAS 53408-94-9 et le méthane sulfonate de plomb (MSPb) est défini par le numéro CAS 17570-76-2.

### EXEMPLE 1 : Mise en œuvre de l'invention selon un premier dispositif.

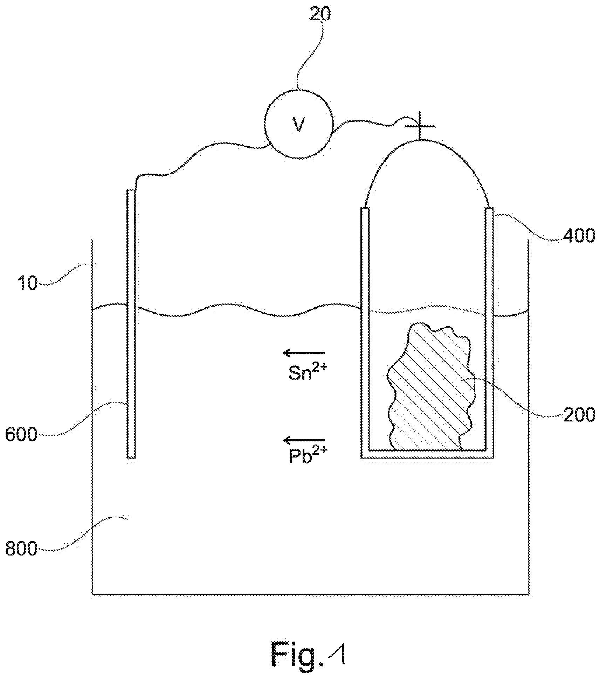

Un premier exemple de mise en œuvre d'un procédé selon l'invention va maintenant être décrit en référence à la figure 1.

La figure 1 montre un bain 10 comprenant une solution électrolytique 800 dans laquelle sont plongées, en partie, une cathode 600 et une anode 200, l'anode 200 étant située dans un panier métallique 400. Il est à noter que ce panier métallique 400 est stable en oxydation et qu'il présente l'avantage de servir de conducteur électrique et de répartiteur de courant. Aussi, notons que ce panier peut également être enveloppé d'une enveloppe poreuse à base de polymère pour conserver physiquement des éléments du mélange électriquement conducteur dont la plus grande dimension est supérieure ou égale à 20 µm (non illustré dans la figure 1).

La cathode 600 utilisée dans cet exemple se présente sous forme d'une fine plaque d'aluminium, d'acier, ou d'étain. La surface active de cette cathode 600 peut être comprise entre 1 et 0.4 fois la surface active de l'anode 200.

L'anode 200 est constituée d'un mélange électriquement conducteur issu de particules métalliques de déchets comprenant au moins de l'étain et/ou du plomb, ainsi que d'autres métaux. Le mélange électriquement conducteur est directement en contact avec la solution électrolytique car le panier présente des pores.

Au sens de la présente invention, par particules métalliques, on entend tout élément métallique pouvant se trouver sous forme de morceau irrégulier de taille micrométrique ou supérieure, ou encore sous forme particulaire, filaire ou tubulaire.

Il est à noter que ce mélange électriquement conducteur peut en outre comprendre des particules métalliques de fer, de cuivre, d'aluminium, de nickel, de titane, d'arsenic, d'antimoine, de bismuth ou encore de métaux précieux comme par exemple d'or, d'argent, etc.

La solution électrolytique 800 comprend des ions étain et/ou des ions plomb en solution dans la solution électrolytique 800 comprenant de l'acide méthane sulfonique MSA.

En particulier, une première solution électrolytique 800 pouvant être utilisée dans ce premier exemple peut comprendre de l'acide méthane sulfonique, dilué ou non à l'eau, comprenant, à un état initial avant que ne commence la réaction électrolytique, du méthane sulfonate d'étain (ci-après désigné par MSSn) à une concentration 30 g/L en étain et du méthane sulfonate de plomb (ci-après désigné par MSPb) à une concentration 50 g/L en plomb en solution dans une solution d'acide méthane sulfonique comprenant 170 g/L d'acide.

Une deuxième solution électrolytique utilisable dans le cadre de ce premier exemple peut également comprendre, à l'état initial, du méthane sulfonate d'étain présent à une concentration 50 g/L en étain dans une solution d'acide méthane sulfonique comprenant 200 g/L d'acide.

Une troisième solution électrolytique 800 utilisable dans ce premier exemple peut encore comprendre, à l'état initial, du méthane sulfonate de plomb présent à une concentration 80 g/L en plomb dans une solution d'acide méthane sulfonique comprenant 180 g/L d'acide.

Chacune des trois solutions électrolytiques 800 précitées peut en outre comprendre un stabilisateur phénolé et/ou des ions chlorures et/ou un antioxydant.

Un tel stabilisateur présente l'avantage d'éviter l'oxydation de l'ion Sn²⁺ en Sn⁴⁺ ainsi que la dégradation partielle du MSA dans le temps.

Par ailleurs, les ions chlorures présentent, quant à eux, l'avantage, en faible quantité de permettre de limiter la passivation (c'est-à-dire la formation d'oxydes en surface) des métaux compris dans l'anode, et donc de faciliter la dissolution de ces métaux. Il est à noter qu'un tel ajout d'ions chlorures n'a pas d'impact sur les performances de la réaction électrolytique.

Enfin, l'antioxydant présente, quant à lui, l'avantage de stabiliser la solution électrolytique 800, et notamment de limiter la réaction d'oxydation de façon à avoir une concentration en Sn²⁺ supérieure à celle en Sn⁴⁺.

Il est à noter que, lorsque la solution électrolytique comprend conjointement du méthane sulfonate d'étain (MSSn) et du méthane sulfonate de plomb (MSPb), le rapport molaire MSSn/MSPb dans la solution électrolytique est de préférence compris entre 0.5 et 5.

Le procédé selon l'invention mis en œuvre par le dispositif de la figure 1 repose, d'une part, sur une électrolixiviation sélective de l'étain et/ou du plomb contenus au préalable dans le mélange électriquement conducteur, et d'autre part, sur une électrodéposition directe de l'étain et/ou du plomb à la cathode 600.

Pour activer l'électrolixiviation, et par conséquent une électrodéposition à la cathode 600 de l'étain ou à la fois de l'étain et du plomb compris initialement dans l'anode 200, le dispositif selon la figure 1 comprend en outre un dispositif électrique 20 reliant la cathode 600 et l'anode 200 de façon à appliquer un courant entre elles, et circulant dans la solution électrolytique 800.

Pour ce faire, il est à noter qu'avant, ou après, la mise en place de la cathode 600 et de l'anode 200 dans la solution électrolytique 800, on relie électriquement, par l'intermédiaire d'un dispositif électrique 20, la cathode 600 et l'anode 200 de façon à ce que l'on puisse appliquer un courant électrique entre elles.

Ainsi, on applique alors un courant électrique entre l'anode 200 et la cathode 600, via le dispositif électrique 20, pour lixivier, par oxydation, l'étain ou à la fois l'étain et le plomb de l'anode 200, et aussi pour permettre le dépôt de l'étain ou à la fois de l'étain et du plomb, initialement compris dans le mélange électriquement conducteur, sur la cathode 600.

Le courant appliqué, dans notre premier exemple, est un courant continu. Toutefois, il peut également être un courant pulsé, un courant continu avec inversion brève pour rafraichir la surface de dépôt et/ou lixivier, ou tout autre courant généralement utilisé pour l'électrodéposition. Il est à noter que si le courant constant appliqué est de l'ordre de 10 A, une chute rapide de cette intensité, de 10 A à 9 A par exemple, peut signifier qu'il y a épuisement de l'étain et/ou du plomb à l'anode 200.

Notons que l'électrolyse peut également avoir lieu à tension constante. Par exemple, la lixiviation des ions étain et/ou plomb, la conduite du procédé électrolytique décrit ici peut être réalisée dans un mode galvanique à tension constante. Notons également qu'alors, la valeur de la tension appliquée peut varier de 0.1 à 5 V selon la nature de la cathode 600 employée, et également selon la distance entre l'anode 200 et la cathode 600, et leur forme.

Il est à noter que dans notre configuration de l'exemple, à savoir que la surface active de la cathode 600 est comprise entre 1 et 0.4 fois la surface active de l'anode 200, nous pouvons obtenir de densités de courant importantes, ces densités pouvant en particulier être comprises entre 150A/m² et 400 A/m². De préférence, la densité de courant souhaitée est égale à 250 A/m².

On préfèrera une telle densité de courant car elle a l'avantage d'obtenir un dépôt pulvérulent et/ou de dépôts facilement détachables de la cathode en fin de réaction, et également de permettre la réduction de la taille de l'électrolyseur tout en gardant des rendements faradiques importants, à savoir supérieurs à 70%.

Par ailleurs, pendant l'électrolyse, le pH de la solution électrolytique 800 n'est pas régulé et la fin de la réaction est renseignée principalement par la chute d'une tension dans le cas où l'électrolyse est réalisée à courant constant, ou par une chute de courant lorsque l'électrolyse est réalisée à tension constante. La fin de réaction peut également être renseignée lorsque l'on observe soit une modification de la différence de potentiel du système anode 200/cathode 600, soit lorsque l'on observe une modification de la différence de potentiel du système constitué d'une électrode de travail et d'une électrode de référence, l'électrode de référence aurait alors été disposée au préalable dans la solution électrolytique 800 (mode galvano). Toutes ces chutes sont induites, dans un premier temps, par l'appauvrissement de l'étain ou de l'étain et du plomb à l'anode 200, et dans un second temps qui ne se produit quand dans des cas extrêmes, par la libération d'un autre métal en absence de l'étain ou de l'étain et du plomb encore accessible directement physiquement et chimiquement à l'anode 200.

Optionnellement, un système spectrophotométrique pourrait par exemple être ajouté au dispositif illustré sur la figure 1 afin d'observer la fin de l'électrolixiviation des particules comprises dans le mélange électriquement conducteur, autrement dit la fin de réaction d'électrolyse.

Optionnellement, lorsqu'on n'a plus, à l'anode 200, de particules d'étain et/ou de plomb à lixivier, on peut retirer de la solution électrolytique 800, le panier métallique 400 et la cathode 600.

Après avoir retiré l'anode 200 avec le panier métallique 400, enveloppé ou non par l'enveloppe poreuse, on rince ce dernier avec la solution électrolytique 800, puis à l'eau, pour récupérer la totalité des ions MSSn et/ou MSPb et le MSA résiduels.

Par exemple, on trempe le panier dans trois bains de rinçage consécutifs, chaque bain comprenant de l'eau à l'état initial. En procédant ainsi et au cours de plusieurs mises en œuvre du procédé électrolytique, on peut remarquer que le premier bain s'enrichit en ions méthane sulfonates (ci-après désigné pas MS) et en métaux qui étaient au préalable présents dans le mélange électriquement conducteur de façon à ce que sa composition se rapproche de celle de la solution électrolytique 800 initiale. Il y a assez de MS et de métaux pour que ce premier bain soit réintroduit dans la solution électrolytique 800 comme appoint.

Puis, on passe le deuxième bain en première position, le troisième bain en deuxième position et on introduit de l'eau dans le troisième bain. Il s'agit d'un mode lavage classique. Dans une autre alternative, on pourrait réaliser une vidange des métaux résiduels compris dans le panier métallique dans une unité de lavage à contrecourant. Cela permet de récupérer la totalité des formes MSSn, MSPb et MSA dans la solution électrolytique 800.

Ensuite, on récupère au moins l'étain et/ou le plomb déposés à la cathode 600. On peut avoir, comme dépôt à la cathode, un solide de SnPb sous forme métallique. Par exemple, les métaux déposés à la cathode 600 constituant un mélange d'étain et de plomb dont les proportions sont fonction du rapport initial de ces deux métaux dans le mélange électriquement conducteur initial. Les métaux sont récupérés selon leurs caractéristiques physiques sous forme soit de plaques/feuilles, soit de particules qu'il est nécessaire de filtrer et laver rapidement avant leur valorisation dans des étapes ultérieures.

Dans le cas où des métaux sous forme ioniques se trouvant en faible teneur co-lixiviés avec l'étain et le plomb se concentreraient dans la solution électrolytique 800, des traitements spécifiques pourraient être mis en œuvre pour la séparation/récupération de ces derniers par des résines échangeuses d'ions par exemple. Dans le cas d'une impossibilité d'extraire tous ces petits métaux sans détériorer la qualité de la solution électrolytique 800, un traitement serait mis en œuvre pour une récupération spécifique (ou en groupe) de chaque métal d'intérêt. Par exemple, ce traitement pourrait mettre en jeu la précipitation/complexation sélective et/ou des résines échangeuses d'ions et/ou l'extraction par solvants.

Il est à noter que le dispositif décrit sur la figure 1 peut optionnellement comprendre tout dispositif, connu de l'homme du métier, pour contrôler et/ou maitriser certains paramètres relatifs à la solution électrolytique 800 comme la température ou encore sa circulation ou son agitation dans le bain 10.

Il est à noter que ce n'est pas la nature des méthano-sulfonates initialement compris dans la solution électrolytique qui contrôle dans le temps la nature du dépôt, mais la nature des métaux compris initialement dans le mélange électriquement conducteur constituant l'anode 200.

Par ailleurs, il est à noter qu'en présence d'une part, d'une solution électrolytique exempte de méthane sulfonate de plomb et comprenant du méthane sulfonate d'étain, et d'autre part d'un mélange électriquement conducteur constituant l'anode 200 et comprenant autant de plomb que d'étain, on tendra dans le temps vers un dépôt à la cathode qui comprendra autant d'étain que de plomb. Toutefois, la nature de la solution électrolytique variera dans le temps.

Ainsi, soit on utilise une solution électrolytique comprenant initialement du MSSn et du MSPb présentant les mêmes ratios que le Sn/Pb présent à l'anode, soit on utilise une solution électrolytique comprenant soit du MSSn soit du MSPb.

### EXEMPLE 2 : Mise en œuvre de l'invention selon un deuxième dispositif.

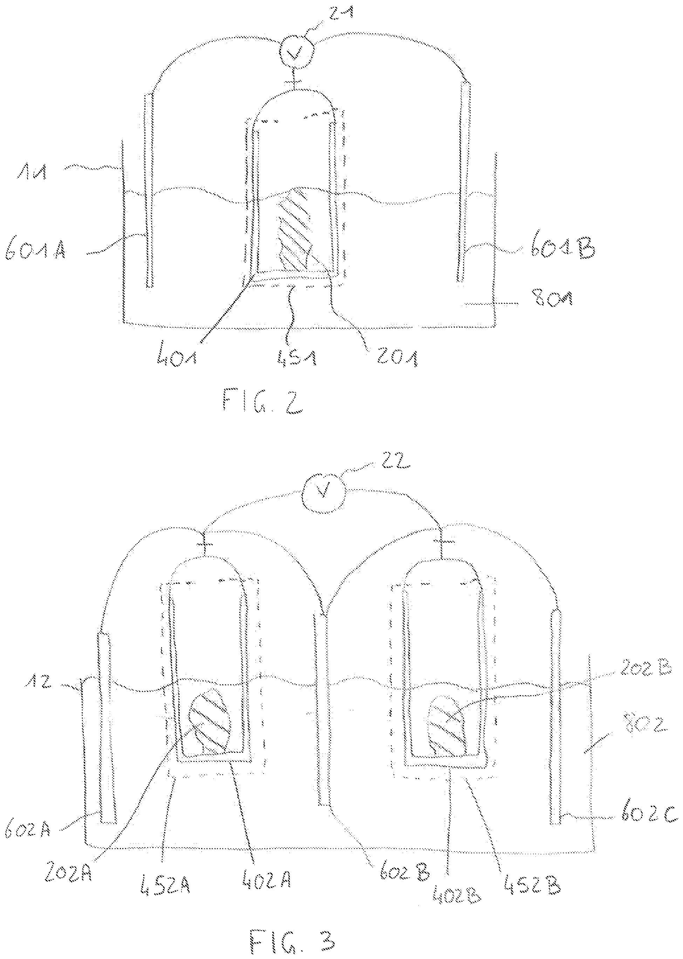

Un deuxième dispositif de mise en œuvre de l'invention va maintenant être décrit dans ce deuxième exemple en référence à la figure 2.

La figure 2 montre un bain 11 comprenant une solution électrolytique 801 dans laquelle sont plongées, en partie, deux cathodes, une première cathode 601A et une deuxième cathode 601B, et une anode 201. L'anode 201 est située dans un panier métallique enveloppée d'une enveloppe poreuse 451. Cette enveloppe poreuse 451 peut typiquement être une chaussette

L'anode 201 constituée ici d'un mélange électriquement conducteur constitué de particules distinctes de cuivre métallique, de nickel métallique, d'aluminium métallique et d'alliage métallique Sn₆₀Pb₄₀ est insérée dans un panier en titane 401, présentant des pores pour permettre son immersion dans la solution électrolytique 801, en guise de panier métallique. Dans ce deuxième exemple, les particules sont des morceaux de plaques métalliques d'épaisseur inférieure à 1 mm et présentant une surface inférieure à 100 mm² environ et des dimensions inférieures à 40 mm environ.

En particulier, le mélange électriquement conducteur de ce deuxième exemple qui constitue l'anode 201 comprend :
- du cuivre à une concentration massique environ égale à 58% par rapport au poids total du mélange,
- du nickel à une concentration massique environ égale à 12% par rapport au poids total du mélange,
- de l'aluminium à une concentration massique environ égale à 12% par rapport au poids total du mélange, et
- un alliage Sn₆₀Pb₄₀ à une concentration massique environ égale à 18% par rapport au poids total du mélange.

Pour activer l'électrolixiviation et l'électrodéposition aux cathodes 601A et 601B de l'étain et du plomb compris initialement dans l'anode 201, le dispositif selon la figure 2 comprend en outre un dispositif électrique 21 reliant les cathodes 601A et 601B et l'anode 201 de façon à appliquer un courant entre elles, le courant circulant dans la solution électrolytique 801.

Dans ce deuxième exemple de mise en œuvre de l'invention, le panier en titane 401 sert de conducteur électrique pour l'anode 201 et est inséré dans une enveloppe poreuse 451 constituée d'un tissu en polypropylène mono-filament présentant une perméabilité à l'air d'environ 900 m³.m⁻².h⁻¹ et d'un point de bulle d'environ 65 µm (tissu proposé par Sefar, réf. PP 25141 AN).

Le panier en titane 401 et son enveloppe poreuse 451 sont immergés dans une solution électrolytique 801 composée :
- d'acide méthane sulfonique MSA à une concentration de 220 g/L d'acide,
- de méthane sulfonate d'étain MSSn à une concentration de 16 g/L en étain,
- de méthane sulfonate de plomb MSPb à une concentration 9 g/L en plomb,
- et d'un agent antioxydant à 4 mL/L : comme agent antioxydant, on utilise par exemple le produit Starglo Anti-Ox commercialisé par Coventya.

Les deux cathodes 601A et 601B sont en acier inoxydable 316L et sont placées dans la solution électrolytique 801 de chaque côté d'un ensemble anodique constitué de l'anode 201, du panier en titane 401 et de l'enveloppe poreuse 451. Un courant en mode continu est appliqué entre le panier en titane 401 qui transmet ensuite le courant à l'anode 201, et les deux cathodes 601A et 601B avec une densité de courant constante aux cathodes environ égale à 210 A.m⁻².

Pendant l'électrolyse, la différence de potentiels entre le panier en titane 401 et les cathodes 601A et 601B croit de 0.2V à 0.7V. Lorsque la différence de potentiels atteint 0.7V, la régulation de l'électrolyse est permutée d'un mode courant constant à un mode tension constante. L'électrolyse est arrêtée quand la densité de courant aux cathodes 601 et 602 décroit de 210 A.m⁻² à moins de 50 A.m⁻². L'ensemble anodique est retiré de la solution électrolytique 801, égoutté puis lavé à l'eau.

L'analyse des métaux résiduels présents encore dans l'ensemble constitué par le panier en titane 401 et l'enveloppe poreuse 451 montre une électrolixiviation complète de l'alliage SnPb. Par ailleurs, cette analyse montre également en particulier que les métaux résiduels comprennent 98% en masse de nickel par rapport au poids total du nickel présent dans le mélange électriquement conducteur initial, et moins de 99% en masse de cuivre par rapport au poids total de cuivre présent dans le mélange électriquement conducteur initial. En outre, aucune lixiviation de l'aluminium n'est à constater : l'intégralité de l'aluminium présent dans le mélange électriquement conducteur initial l'est encore après l'électrolyse.

La masse de dépôt de SnPb réduit à chacune des cathodes 601A et 601B représente 83% en masse d'alliage SnPb par rapport au poids total de l'alliage SnPb électrolixivié à l'anode, se traduisant dans ce deuxième exemple, par un léger enrichissement en étain et en plomb de la solution électrolytique 801 au cours de l'électrolyse.

### EXEMPLE 3 : Mise en œuvre de l'invention selon un troisième dispositif.

Un troisième dispositif de mise en œuvre de l'invention va maintenant être décrit dans ce troisième exemple en référence à la figure 3.

La figure 3 montre un bain 12 comprenant une solution électrolytique 802 dans laquelle sont plongées, en partie, trois cathodes (une première cathode 602A, une deuxième cathode 602B et une troisième cathode 602C) et deux anodes 202A et 202B, et deux paniers métalliques 402A et 402B enveloppés d'une enveloppe poreuse 452A et 452B comme dans l'exemple 2. Chacune des anodes 202A et 202B est située dans un panier métallique 402A et 402B. Ici, les paniers métalliques 402A et 402B sont en titane et servent, comme pour les autres exemples, de conducteur électrique pour chacune des anodes 202A et 202B les contenant. Les enveloppes poreuses 452A et 452B sont constituées d'un tissu en polypropylène multi-filaments présentant une perméabilité à l'air d'environ 800 m³.m⁻².h⁻¹ et d'un point de bulle environ égal à 55 µm.

Les cathodes 602A, 602B et 602C sont en aluminium. La première cathode 602A et la troisième cathode 602C sont placées dans la solution électrolytique de chaque côté du bain 12, et la deuxième cathode est placée entre les deux paniers métalliques 402A et 402B enveloppés.

La solution électrolytique 802 est composée d'acide méthane sulfonique MSA à 226 g/L en acide et de méthane sulfonate d'étain MSSn à une concentration de 45 g/L en étain, aucun méthane sulfonate de plomb MSPb n'est présent à l'état initial dans la solution électrolytique 802.

Ce troisième exemple, en référence à la figure 3, décrit en particulier une extraction d'étain et de plomb compris initialement dans un unique mélange électriquement conducteur issu de déchets. Cet unique mélange est alors partagé en six portions sensiblement égales. Chacune de ces portions vont être traitée deux par deux et vont alors être considérées deux par deux comme étant les deux anodes 202A et 202B. Ainsi, chacune des deux anodes 202A et 202B présentent la même composition. Ces deux différentes anodes 202A et 202B sont traitées simultanément par une même solution électrolytique 802 afin d'atteindre un régime stationnaire.

Le mélange électriquement conducteur dont sont issus les différentes portions comprend des particules de déchets présentant des tailles diverses comprises entre 25 µm et plus de 10 mm, et provenant d'un procédé mécanique de broyage de déchets d'équipements électriques et électroniques. Ce mélange électriquement conducteur est constitué, dans ce troisième exemple, majoritairement :
- de particules de cuivre métallique et d'alliages métalliques de cuivre,
- d'aluminium métallique et d'alliages métalliques de l'aluminium,
- de fer métallique et d'alliages métalliques du fer,
- d'étain et d'alliages métalliques d'étain pouvant contenir du plomb (brasures non RoHs).

Les analyses chimiques et métallogéniques réalisées sur le mélange électriquement conducteur montrent que celui-ci comprend, dans ce troisième exemple :
- des alliages de cuivre à une concentration massique environ égale à 73% par rapport au poids total du mélange,
- des alliages d'aluminium à une concentration massique environ égale à 0.9% par rapport au poids total du mélange,
- des alliages de fer à une concentration massique environ égale à 1.7% par rapport au poids total du mélange, et
- des alliages d'étain à une concentration massique environ égale à 18.7% par rapport au poids total du mélange.

Le mélange électriquement conducteur comprend en outre d'autres éléments solides comme, par exemple, des particules comprenant des éléments chimiques tels que O, S, Si, Ca, Br, As, Bi, Ag, Mo, Sb, etc. La somme de ces derniers éléments solides sont présents à une concentration environs égale à 5.7% en masse par rapport au poids total du mélange électriquement conducteur.

Dans cet exemple, les alliages d'étain compris dans le mélange électriquement conducteur sont abusivement considérés comme des alliages d'étain contenant principalement du plomb et dont le rapport massique calculé montrerait la présence d'un alliage d'étain moyen de type Sn₈₀Pb₂₀.

Ces portions sont introduites deux à deux dans les deux ensembles panier métallique 402A/enveloppe poreuse 452A et panier métallique 402B/enveloppe poreuse 452B, formant ainsi les deux anodes 202A et 202B.

Un courant en mode continu est appliqué entre chaque panier métallique 402A et 402B et chaque cathode 602A, 602B et 602C, via un dispositif électrique 22, lorsque les paniers métalliques 402A et 402B sont immergés dans la solution électrolytique 802. Le courant présente une densité de courant constante à chacune des cathodes 602A, 602B et 602C environ égale à 250 A.m⁻².

Chaque portion est alors immergée deux à deux, comme présenté ci-après, dans une même solution électrolytique 802. Autrement dit, un premier lot constitué de deux premières portions est en premier lieu immergé. En deuxième lieu, un deuxième lot constitué de deux autres portions est immergé. Puis en troisième lieu, un troisième lot constitué des deux dernières portions est immergé.

Pendant l'électrolyse, la différence de potentiels entre les paniers métalliques 402A et 402B et les cathodes 602A, 602B et 602C croit de 0.2V à 0.5V. Lorsque la différence de potentiels atteint 0.5V, la régulation de l'électrolyse est permutée d'un mode courant constant à un mode tension constante. L'électrolyse est arrêtée quand la densité de courant aux cathodes 602A, 602B et 602C décroit de 250 A.m⁻² à moins de 190 A.m⁻².

Les ensembles anodiques (panier métallique 402A et 402B/enveloppe poreuse 452A et 452B/anodes 202A et 202B) sont retirés de la solution électrolytique 802, égoutté puis lavé à l'eau. Les paniers métalliques 402A et 402B enveloppés sont vidés et les particules résiduelles illustrant les premières différentes fractions obtenues suite au traitement de ce premier lot sont récupérées. Les cathodes 602A, 602B et 602C sont retirées et égouttées. Les métaux électrodéposés sont récupérés aux cathodes 602A, 602B et 602C par raclage doux, lavés à l'eau, puis déshydratés.

Ensuite, le second lot est introduit dans les paniers métalliques 402A et 402B enveloppés précédemment vidés. Les paniers métalliques 402A et 402B enveloppés sont ensuite immergés dans la solution électrolytique 802 précédemment utilisée. Les cathodes 602A, 602B et 602C précédemment raclées de leurs dépôts sont placées dans la solution électrolytique 802 comme dans la configuration initiale. Le même courant en mode continu que celui appliqué au premier lot est appliqué entre les cathodes 602A, 602B et 602C et anodes 202A et 202B avec une régulation identique à celle établie pour le premier lot.

En fin de réaction, les secondes différentes fractions obtenues suite au traitement du deuxième lot sont récupérées elles aussi avec un protocole identique à celui opéré sur le premier lot.

Ensuite, le troisième lot est introduit dans les paniers métalliques 402A et 402B enveloppés précédemment vidés. Les paniers métalliques 402A et 402B enveloppés sont ensuite immergés dans la solution électrolytique 802 précédemment utilisée. Les cathodes 602A, 602B et 602C précédemment raclées de leurs dépôts sont placées dans la solution électrolytique 802 comme dans la configuration initiale. Le même courant en mode continu que celui appliqué au premier lot et au deuxième lot est appliqué au troisième lot entre les cathodes 602A, 602B et 602C et anodes 202A et 202B avec une régulation identique à celle établie pour le premier lot.

En fin de réaction, les troisièmes différentes fractions elles aussi sont récupérées avec un protocole identique à celui opéré sur les premier et second lots.

Les analyses chimiques élémentaires moyennées sur les trois différentes fractions récupérées dans les ensembles anodiques (paniers métalliques 402A et 402B/enveloppe poreuse 452A et 452B) montrent une électrolixiviation majoritaire d'étain et de plomb à hauteurs respectives de 88.3% et de 86.5% par rapport aux teneurs analysées dans le déchet brut. Les autres métaux que très partiellement électrolixiviés sont Ni, Al, Fe et Ca avec des ratios respectifs de 5%, 2.8%, 2.2% et 1.2% par rapport à leurs teneurs analysées dans le mélange électriquement conducteur initial avant traitement.

Les analyses chimiques des dépôts aux cathodes 602A, 602B et 602C montrent l'obtention constante d'alliages SnₓPb_{y} de grade supérieur à 99.9%. Les teneurs en étain et plomb dans l'alliage moyen sur les trois essais consécutifs indiquent un alliage de type Sn₈₇Pb₁₃. Les analyses réalisées séparément sur les trois lots de dépôt aux cathodes 602A, 602B et 602C montrent une évolution d'un alliage de type Sn₉₉Pb₁ vers un alliage de type Sn₈₀Pb₂₀, c'est-à-dire comparable à la composition des alliages d'étain analysés dans le mélange électriquement conducteur initial avant traitement.

Les analyses de l'évolution de la composition de la solution électrolytique 802 au cours du traitement des trois lots montrent un remplacement partiel du méthane sulfonate d'étain en méthane sulfonate de plomb jusqu'à un équilibre atteint en fin du traitement du deuxième lot. Le régime stationnaire dans les conditions opérées dans cet exemple est donc atteint en fin de traitement du deuxième lot.

## Revendications

1. Procédé électrolytique pour extraire l'étain ou à la fois l'étain et le plomb compris dans un mélange électriquement conducteur issu de déchets, ledit mélange électriquement conducteur étant constitué de plusieurs éléments solides et comprenant :
- moins de 50% en masse, par rapport au poids total du mélange, d'étain sous forme métallique,
- moins de 25% en masse, par rapport au poids total du mélange, de plomb sous forme métallique, et
- plus de 25% en masse, par rapport au poids total du mélange, de cuivre métallique, et/ou de fer métallique, et/ou d'aluminium métallique, et/ou d'alliage métallique comprenant du cuivre et/ou du fer et/ou de l'aluminium,
ledit procédé étant **caractérisé en ce qu'**il comprend les étapes consistant à :
a) constituer une anode (200, 201, 202A, 202B) à partir dudit mélange électriquement conducteur,
b) préparer une solution électrolytique (800, 801, 802) comprenant de l'acide méthane sulfonique à une concentration comprise entre 150 g/L et 250 g/L, et du méthane sulfonate d'étain à une concentration comprise entre 10 g/L et 60 g/L en étain et/ou du méthane sulfonate de plomb MSPb à une concentration comprise entre 5 g/L et 120 g/L en plomb,
c) fournir une cathode (600, 601A, 601B, 602A, 602B, 602C),
d) immerger au moins en partie ladite anode (200, 201, 202A, 202B) et ladite cathode (600, 601A, 601B, 602A, 602B, 602C) dans ladite solution électrolytique (800, 801, 802), et
e) appliquer un courant électrique, entre ladite anode (200, 201, 202A, 202B) et ladite cathode (600, 601A, 601B, 602A, 602B, 602C), via un dispositif électrique (20, 21, 22), pour lixivier par oxydation l'étain ou à la fois l'étain et le plomb de l'anode (200, 201, 202A, 202B), et permettre le dépôt sur la cathode (600, 601A, 601B, 602A, 602B, 602C) de l'étain ou à la fois de l'étain et du plomb, initialement compris dans le mélange électriquement conducteur.

2. Procédé selon la revendication 1, selon lequel le procédé comprend une étape de compactage dudit mélange électriquement conducteur réalisée soit avant l'étape a) de constitution de l'anode (200, 201, 202A, 202B), soit ultérieurement.

3. Procédé selon la revendication 1, selon lequel après l'étape a) de constitution de l'anode (200, 201, 202A, 202B), cette anode (200, 201, 202A, 202B) est insérée dans un panier métallique (400, 401, 402A, 402B).

4. Procédé selon la revendication 3, selon lequel ledit panier métallique (400, 401, 402A, 402B) est en titane, en acier inoxydable ou en carbone.

5. Procédé selon l'une quelconque des revendications 1 à 4, selon lequel ledit mélange électriquement conducteur comprend moins de 5% en masse, par rapport au poids total dudit mélange électriquement conducteur (800), de tout métal moins noble que l'étain et le plomb, ledit métal étant accessible directement physiquement et chimiquement par la solution électrolytique (800).

6. Procédé selon l'une quelconque des revendications 3 ou 4, comprenant en outre, à l'issue de l'étape e), les étapes suivantes :
- retirer ledit panier métallique (400, 401, 402A, 402B) et ladite cathode (600, 601A, 601B, 602A, 602B, 602C) de ladite solution électrolytique (800, 801, 802),
- rincer ledit panier métallique (400, 401, 402A, 402B) avec ladite solution électrolytique (800, 801, 802), puis à l'eau pour récupérer la totalité du méthane sulfonate d'étain et/ou du méthane sulfonate de plomb résiduels sur ledit panier, et
- récupérer au moins l'étain ou à la fois l'étain et le plomb déposés à la cathode (600, 601A, 601B, 602A, 602B, 602C).

7. Procédé selon l'une quelconque des revendications 3 ou 4, selon lequel on enveloppe le panier métallique (400, 401, 402A, 402B) d'une enveloppe poreuse à base de polymère, pour conserver physiquement des éléments dudit mélange électriquement conducteur dont la plus grande dimension est supérieure ou égale à 20 µm.

8. Procédé selon l'une quelconque des revendications 1 à 7, selon lequel la solution électrolytique (800, 801, 802) comprend en outre un stabilisateur phénolé et/ou des ions chlorures et/ou un antioxydant.

9. Procédé selon l'une quelconque des revendications 1 à 8, selon lequel la cathode (600, 601A, 601B, 602A, 602B, 602C) est composée soit d'aluminium, soit d'acier, soit d'étain et/ou de plomb.

10. Procédé selon l'une quelconque des revendications 1 à 9, selon lequel la densité du courant appliqué est comprise entre 150 et 400 A/m² à la cathode (600, 601A, 601B, 602A, 602B, 602C), la cathode (600, 601A, 601B, 602A, 602B, 602C) ayant une forme de plaque.

## Patentansprüche

1. Elektrolytisches Verfahren zum Extrahieren von in einem aus Abfällen stammenden elektrisch leitfähigen Gemisch umfassten Zinn oder gleichzeitig von Zinn und Blei, wobei das elektrisch leitfähige Gemisch aus mehreren festen Elementen besteht und umfasst:
- weniger als 50 Massen-%, bezogen auf das Gesamtgewicht des Gemisches, Zinn in metallischer Form,
- weniger als 25 Massen-%, bezogen auf das Gesamtgewicht des Gemisches, Blei in metallischer Form und
- mehr als 25 Massen-%, bezogen auf das Gesamtgewicht des Gemisches, metallisches Kupfer und/oder metallisches Eisen und/oder metallisches Aluminium und/oder Metalllegierung, umfassend Kupfer und/oder Eisen und/oder Aluminium,
wobei das Verfahren **dadurch gekennzeichnet ist, dass** es die Schritte umfasst bestehend aus:
a) Bilden einer Anode (200, 201, 202A, 202B) ausgehend von dem elektrisch leitfähigen Gemisch,
b) Zubereiten einer Elektrolytlösung (800, 801, 802), umfassend Methansulfonsäure bei einer Konzentration im Bereich zwischen 150 g/l und 250 g/l und Zinnmethansulfonat bei einer Konzentration im Bereich zwischen 10 g/l und 60 g/l an Zinn und/oder Bleimethansulfonat MSPb bei einer Konzentration im Bereich zwischen 5 g/l und 120 g/l an Blei,
c) Bereitstellen einer Kathode (600, 601A, 601B, 602A, 602B, 602C),
d) Eintauchen, mindestens zum Teil, der Anode (200, 201, 202A, 202B) und der Kathode (600, 601A, 601B, 602A, 602B, 602C) in die Elektrolytlösung (800, 801, 802) und
e) Anlegen eines elektrischen Stroms zwischen der Anode (200, 201, 202A, 202B) und der Kathode (600, 601A, 601B, 602A, 602B, 602C) mittels einer elektrischen Vorrichtung (20, 21, 22), um das Zinn oder gleichzeitig das Zinn und Blei der Anode (200, 201, 202A, 202B) auszulaugen und das Abscheiden des Zinns oder gleichzeitig des Zinns und Bleis, das anfänglich in dem elektrisch leitfähigen Gemisch vorhanden war, auf der Kathode (600, 601A, 601B, 602A, 602B, 602C) zu gestatten.

2. Verfahren nach Anspruch 1, nach dem das Verfahren einen Kompaktierungsschritt des elektrisch leitfähigen Gemisches umfasst, das entweder vor dem Schritt a) des Bildens der Anode (200, 201, 202A, 202B) ausgeführt wird oder danach.

3. Verfahren nach Anspruch 1, nach dem im Anschluss an den Schritt a) des Bildens der Anode (200, 201, 202A, 202B) diese Anode (200, 201, 202A, 202B) in einen metallischen Korb (400, 401, 402A, 402B) eingesetzt wird.

4. Verfahren nach Anspruch 3, nach dem der metallische Korb (400, 401, 402A, 402B) aus Titan, Edelstahl oder aus Kohlenstoff besteht.

5. Verfahren nach einem der Ansprüche 1 bis 4, nach dem das elektrisch leitfähige Gemisch weniger als 5 Massen-%, bezogen auf das Gesamtgewicht des elektrisch leitfähigen Gemisches (800), von allen Metallen weniger edel als Zinn und Blei umfasst, wobei das Metall durch die Elektrolytlösung (800) physikalisch und chemisch direkt zugänglich ist.

6. Verfahren nach einem der Ansprüche 3 oder 4, umfassend des Weiteren am Ende von Schritt e) die folgenden Schritte:
- Herausnehmen des metallischen Korbs (400, 401, 402A, 402B) und der Kathode (600, 601A, 601B, 602A, 602B, 602C) aus der Elektrolytlösung (800, 801, 802),
- Spülen des metallischen Korbs (400, 401, 402A, 402B) mit der Elektrolytlösung (800, 801, 802), anschließend mit Wasser, um die Gesamtheit des auf dem Korb zurückbleibenden Zinnmethansulfonats und/oder Bleimethansulfonats zurück zu gewinnen und
- mindestens Zurückgewinnen von an der Kathode (600, 601A, 601B, 602A, 602B, 602C) abgeschiedenem Zinn oder gleichzeitig von Zinn und Blei.

7. Verfahren nach einem der Ansprüche 3 oder 4, nach dem der metallische Korb (400, 401, 402A, 402B) mit einer porösen Hülle auf Polymerbasis umhüllt wird, um die Elemente des elektrisch leitfähigen Gemisches physikalisch festzuhalten, von denen die größte Abmessung größer als oder gleich 20 µm ist.

8. Verfahren nach einem der Ansprüche 1 bis 7, nach dem die Elektrolytlösung (800, 801, 802) des Weiteren einen phenolhaltigen Stabilisator und/oder Chloridionen und/oder ein Antioxidationsmittel umfasst.

9. Verfahren nach einem der Ansprüche 1 bis 8, nach dem die Kathode (600, 601A, 601B, 602A, 602B, 602C) entweder aus Aluminium oder Stahl oder Zinn und/oder Blei zusammengesetzt ist.

10. Verfahren nach einem der Ansprüche 1 bis 9, nach dem die Dichte des an der Kathode (600, 601A, 601B, 602A, 602B, 602C) angelegten Stroms im Bereich zwischen 150 und 400 A/m² liegt, wobei die Kathode (600, 601A, 601B, 602A, 602B, 602C) eine Plattenform aufweist.

## Claims

1. Electrolytic method for extracting tin and/or lead contained in an electrically conductive mixture derived from waste, said electrically conductive mixture consisting of a plurality of solid elements and comprising:
- less than 50% by mass, with respect to the total weight of the mixture, of tin in metallic form,
- less than 25% by mass, with respect to the total weight of the mixture, of lead in metallic form,
- more than 25% by mass, with respect to the total weight of the mixture, of metallic copper, and/or metallic iron, and/or metallic aluminium, and/or metallic alloy comprising copper and/or iron and/or aluminium.
said method being **characterised in that** it comprises the steps of:
a) forming an anode (200, 201, 202A, 202B) from said electrically conductive mixture,
b) preparing an electrolytic solution (800, 801, 802) comprising methanesulfonic acid at a concentration of between 150 g/l and 250 g/l, and tin methanesulfonate at a concentration of between 10 g/l and 60 g/l of tin and/or lead methanesulfonate MSPb at a concentration of between 5 g/l and 120 g/l of lead,
c) providing a cathode (600, 601A, 601B, 602A, 602B, 602C),
d) at least partly immersing said anode (200, 201, 202A, 202B) and said cathode (600, 601A, 601B, 602B, 602C) in said electrolytic solution (800, 801, 802), and
e) applying an electric current between said anode (200, 201, 202A, 202B) and said cathode (600, 601A, 601B, 602A, 602B, 602C), via an electrical device (20, 21, 22), in order, by oxidation, to lixiviate the tin or both the tin and the lead of the anode (200, 201, 202A, 202B), and to allow the deposition on the cathode (600, 601A, 601B, 602A, 602B, 602C) of the tin or of both the tin and the lead initially contained in the electrically conductive mixture.

2. Method according to claim 1, according to which the method comprises a step of compacting said electrically conductive mixture carried out either before step a) of formation of the anode (200, 201, 202A, 202B) or subsequently.

3. Method according to claim 1, according to which, after step a) of formation of the anode (200, 201, 202A, 202B), this anode (200, 201, 202A, 202B) is inserted in a metal basket (400, 401, 402A, 402B).

4. Method according to claim 3, according to which said metal basket (400, 401, 402A, 402B) is made from titanium, stainless steel or carbon.

5. Method according to any of claims 1 to 4, according to which said electrically conductive mixture comprises less than 5% by mass, with respect to the total weight of said electrically conductive mixture (800), of any metal less noble than tin and lead, said metal being directly accessible physically and chemically to the electrolytic solution (800).

6. Method according to any of claims 3 or 4, further comprising, at the end of step e), the following steps:
- removing said metal basket (400, 401, 402A, 402B) and said cathode (600, 601A, 601B, 602A, 602B, 602C) from said electrolytic solution (800, 801, 802),
- rinsing said metal basket (400, 401, 402A, 402B) with said electrolytic solution (800, 801, 802), and then with water in order to recover all the residual tin methanesulfonate and/or lead methanesulfonate on said basket, and
- recovering at least the tin or both the tin and the lead deposited at the cathode (600, 601A, 601B, 602A, 602B, 602C).

7. Method according to any of claims 3 or 4, according to which the metal basket (400, 401, 402A, 402B) is enveloped in a polymer-based porous envelope in order to physically keep elements of said electrically conductive mixture the largest dimension of which is greater than or equal to 20 µm.

8. Method according to any of claims 1 to 7, according to which the electrolytic solution (800, 801, 802) further comprises a phenolic stabiliser and/or chloride ions and/or an antioxidant.

9. Method according to any of claims 1 to 8, according to which the cathode (600, 601A, 601B, 602A, 602B, 602C) is composed either of aluminium, or steel, or tin and/or lead.

10. Method according to any of claims 1 to 9, according to which the density of the current applied is between 150 and 400 A/m² at the cathode (600, 601A, 601B, 602A, 602B, 602C), the cathode (600, 601A, 601B, 602A, 602B, 602C) being in the form of a plate.
